Europäisches Patentamt

European Patent Office

Office européen des brevets

(11) Publication number: **0 330 771**
A1

# EUROPEAN PATENT APPLICATION

(21) Application number: 88301788.1

(22) Date of filing: 01.03.88

(51) Int. Cl.⁴: **B60R 13/06 , B60J 7/195 ,
E06B 7/23**

(43) Date of publication of application:
06.09.89 Bulletin 89/36

(84) Designated Contracting States:
AT BE DE FR GB

(71) Applicant: **TUDOR WEBASTO LIMITED
Forge Lane Minworth Industrial Park
Sutton Coldfield West Midlands B76
8AH(GB)**

(72) Inventor: **Katoh, Akitsugu
2-24-2, Hamada Fuchu-cho
Aki-gun Hiroshima-ken(JP)**

(74) Representative: **Needle, Jacqueline
W.H. BECK, GREENER & CO 7 Stone
Buildings Lincoln's Inn
London WC2A 3SZ(GB)**

(54) Apparatus for sealing an opening.

(57) Apparatus for sealing an opening, such as a motor vehicle roof opening (6), which is openable and closable by way of a closure member, such as a sliding roof panel (7), comprises an elongate, hollow sealing strip (14) inserted between the opening (6) and its closure member (7). The interior of the sealing strip (14) is arranged to be pressurised or evacuated by way of a pressure controlling device (22), and is communicated with this device (22) by way of a hollow connection piece (17). The connection piece (17) also connects the two ends of the sealing strip (14), and the connection piece has substantially the same cross-sectional shape as the sealing strip such that a substantially endless sealing strip is formed.

FIG. 4

## APPARATUS FOR SEALING AN OPENING.

The present invention relates to apparatus for sealing an opening which is arranged to be opened and closed by a closure member.

Japanese Patent Application No. Sho. 59-128030 discloses the sealing of the peripheries of openings in motor vehicles by inserting a hollow weatherstrip between the opening and its closure member. The weatherstrip is connected to a pressure controlling device which increases the pressure within the weatherstrip when the opening is closed to ensure good contact between the strip and the surface to be sealed. When the opening is to be opened, the pressure within the strip is reduced.

For maximum efficiency of sealing, the hollow strip needs to be endless. However, as it is usually required to form the strip by extrusion, it is necessary to connect the two ends of the strip after it has been bent around the periphery of the opening to be sealed. It is difficult to obtain a reliable join which can be pressurised without leakage. There is also a problem in making a connection between an endless strip and the pressure controlling device, particularly as the connection must be able to withstand fluid pressure, and be adaptable to the particular conditions of the site where the strip is to be mounted.

According to the present invention, there is provided apparatus for sealing an opening which is arranged to be opened and closed by a closure member, said apparatus comprising an elongate, hollow sealing strip for insertion between the opening and the closure member, and means for coupling the interior of said sealing strip means for varying the pressure within said strip, characterised in that said coupling means comprises a hollow, connection piece having an outlet medium port, and in that said connection piece is connected to both ends of said sealing strip, the cross-section of said connection piece substantially corresponding to that of said hollow sealing strip such that an endless sealing strip is formed.

Preferably, said sealing strip has an elongate, tubular part whose cross-sectional shape is substantially identical to that of said connection piece, and wherein the size and shape of the external periphery of said tubular part and of said connection piece are substantially the same.

The connection piece not only connects the sealing strip to make it endless, but also enables its communication to a pressure controlling device. As the size and shape of the connection piece corresponds to that of the sealing strip a reliable joint between the ends of the sealing strip is ensured. Furthermore, as there are no areas along the length of the sealing strip with different dimensions, reliable sealing around the periphery of the opening can also be ensured.

In one embodiment, at both of its ends, the end surface of the connection piece is directly abutted and adhered or bonded to the respective end of the sealing strip.

In an alternative embodiment, a reduced dimension, projecting end portion is provided at each end of the connection piece, each said end portion being received within a respective end of the sealing strip. Each said projecting end portion is of reduced transverse dimension as compared to the rest of said connection piece whereby a peripheral shoulder is formed, and each said end portion is received within a respective end of said sealing strip with the end surface of the sealing strip abutted against said shoulder. With this embodiment, it can be reliably ensured that there is no increase in the dimensions of the endless sealing strip at the connection.

Apparatus of the invention also preferably comprises co-operable means on said connection piece and on said outlet spout to detachably hold said outlet spout in position, wherein said co-operable means comprise a boss surrounding said outlet port and two spaced peripheral flanges extending around one end of said outlet spout, the boss being engageable between said peripheral flanges.

Because the output spout and the connection piece are separate entities in this embodiment, each part is simple to manufacture. Also, different forms of outlet spout can be selected as required to suit the conditions of the site where the sealing apparatus is to be fitted.

Embodiments of the present invention will hereinafter be described, by way of example, with reference to the accompanying drawings, in which:

Figure 1 shows a schematic, perspective view of part of a motor car,

Figure 2 shows a section taken along the line A - A of Figure 1,

Figure 3 shows a plan view of an endless sealing strip for use in sealing a sun-roof opening in the motor car of Figures 1 and 2,

Figure 4 is an exploded perspective view showing the connection of the ends of a hollow strip by way of a connection piece to form an endless sealing strip,

Figure 5 shows a section through the connection piece of Figure 4 sealed to the free ends of the hollow strip,

Figure 6 shows a partly exploded, perspective view of an alternative connection piece connecting the two ends of a hollow sealing strip,

Figure 7 shows a section through the connection piece of Figure 6, and

Figure 8 shows a section through an alternative embodiment of a connection piece.

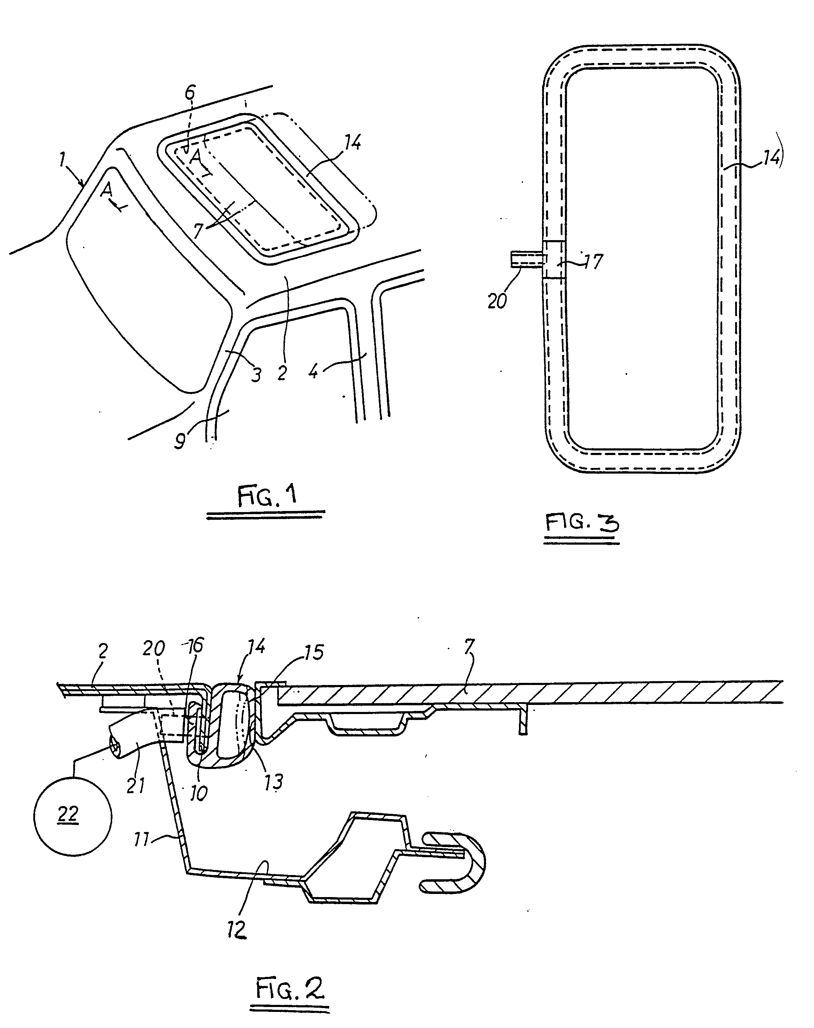

Figure 1 shows a partial perspective view of a motor car 1. Visible in the drawing is the roof 2 of the car, the front windshield 3, and part of the side 4. The roof 2 is provided with an opening 6 in which a roof panel 7 is arranged to be slid between a fully open and a fully closed position. In this respect, in known manner, guide rails (not shown) for the roof panel 7 extend along each side of the opening 6. In addition, the side 4 of the motor car is provided with a front access opening (not visible) which is opened or closed by way of a front door 9.

Of course, the provision of doors and roof panels in motor cars, and other vehicles, is known, and there are many ways in which these doors and roof panels are mounted and are enabled to move. However, the structure and mounting of the closure members is outside the scope of this invention and is not therefore further described herein.

The present invention is concerned with the sealing of the periphery of an opening when it is closed by a closure member, and as such is applicable to any such opening. In the following description, the sealing apparatus is described with reference to the weather sealing of the sliding roof panel 7 of the illustrated motor car.

The opening 6 in the roof 2 of the motor car has, as can be seen from Figure 2, a downwardly extending flange 10 which extends around the entire periphery of the opening 6. An endless sealing strip 14 is affixed to the flange 10 to likewise extend around the entire periphery of the opening 6. Thus, when the roof panel 7 is in its closed position, the sealing strip 14 presses against the external peripheral surface 13 of the roof panel 7.

A peripheral frame member 11, whose periphery substantially corresponds to that of the opening 6, is affixed to the internal surface of the roof 2 to surround the opening 6. In known manner, a rain trough 12 is formed in the peripheral frame 11.

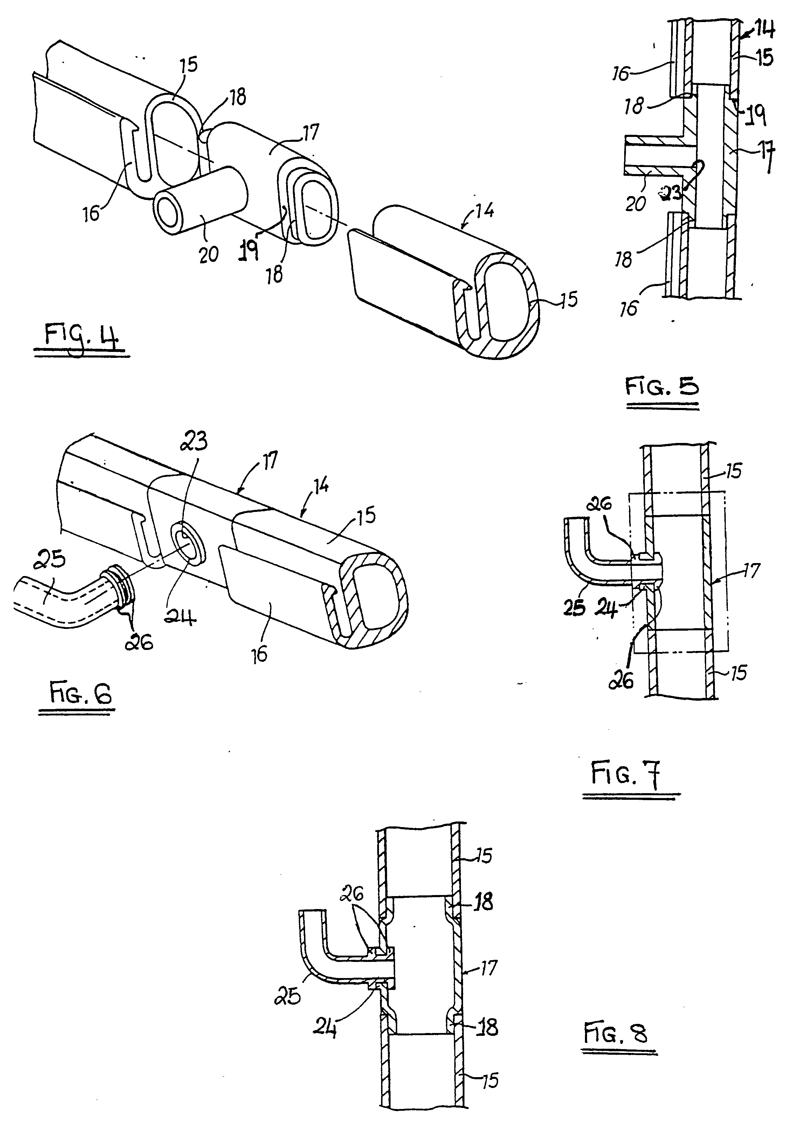

The endless sealing strip 14 is formed from an elongate, hollow strip of elastic material whose free ends are connected to form the endless sealing strip as can be seen from Figure 3. In this respect, the two ends of the hollow strip are connected by way of a connection piece 17.

The sealing strip 14 is preferably formed by extrusion moulding. A cross-section of the strip is shown in Figure 2, from which it will be seen that, in the embodiment illustrated, the strip has a tubular part 15, which has a substantially D-shaped cross-section, and an integral projecting rib 16. In this particular embodiment, the rib 16 extends substantially parallel to the upright of the D-shaped cross-section to define a channel between the rib 16 and the tubular part 15 in which the peripheral flange 10 of the roof opening 6 can be received. The sealing strip 14 can be attached to the periphery of the opening 6 by any suitable means. In the illustrated embodiment, the peripheral flange 10 of the opening is held between the rib 16 and the tubular part 15 by way of adhesive.

The connection piece 17 which is used to form the endless sealing strip 14 is clearly illustrated in Figure 4. It will be seen that the connection piece 17 is hollow and has a substantially D-shaped cross-section which is substantially identical to the cross-section of the tubular part 15. The external dimensions of the hollow connection piece 17 are substantially identical to the external dimensions of the tubular part of the sealing strip 14. At each of its ends, the connection piece 17 is formed to have an axially extending end flange 18 which is reduced in its transverse dimensions as compared to the main body of the connection piece 17 such that a peripheral shoulder 19 is defined. The connection piece 17 is connected to the hollow strip 14 by the engagement of each end flange 18 within a respective end of the hollow strip such that the free end face of the hollow strip comes into contact with a respective shoulder 19. The connection piece 17 may be fixed in position relative to the ends of the hollow strip by adhesive.

Figure 5 shows a section through the endless sealing strip 14 formed when its ends have been connected by way of the connection piece 17. It will be apparent from Figure 5 that the connection piece 17 is arranged substantially coaxially with the tubular part 15 of the strip 14, and also that the external surface of the connection piece 17 is substantially coplanar with that of the tubular part 15.

The connection piece 17 is hollow and has an outlet port 23 in its wall at one end of an outlet spout 20, arranged to communicate the interior of the connection piece 17 with its exterior. The outlet spout 20 gives the connection piece 17 a substantially T-shaped configuration. As is shown in Figure 2, this outlet spout 20 is coupled to a pressure increasing and/or pressure reducing device, indicated at 22, by way of a hose 21.

The device 22 can be used to vary the interior pressure of the connection piece 17 and hence of the endless sealing strip 14.

Preferably, the connection piece 17 is made of the same elastic material as the endless sealing strip 14, or at least has the same degree of elasticity. Instead of being adhered, the connection piece and the sealing strip may be connected by bonding, for example by vulcanisation.

In the embodiment illustrated, when the roof opening is closed, compressed air is fed by way of the device 22 and the hose 21 into the interior of the tubular part 15 of the endless sealing strip 14. This increase in pressure within the sealing strip has the effect of pressing the strip 14 against the peripheral surface 13 of the roof panel 7. In this way, the effectiveness of the seal provided by the sealing strip 14 is enhanced.

The structure of the connection piece 17 and the manner of its connection to the sealing strip 14 ensures a reliable joint such that loss of internal pressure is prevented. Furthermore, as the sealing strip 14 is fitted around the end flanges 18, which have a reduced transverse dimension, the transverse dimension of the sealing strip at the joint is the same as elsewhere along the length of the strip 14. Because there is no area of increased transverse dimension, close adhesion of the sealing strip 14 to the peripheral surface 13 can be achieved around the whole periphery of the opening so that a good sealing effect is obtained.

When the roof panel 7 is to be moved to open the opening 6, the pressure within the sealing strip 14 is first of all reduced to atmospheric pressure. This has the effect that the contact resistance of the sealing strip 14 against the peripheral surface 13 of the panel 7 is reduced. Not only does this prevent damage to the sealing strip 14 during opening movement of the roof panel 7, but it also facilitates the opening operation.

In the illustrated embodiment, the sealing strip 14 is secured around the periphery of the roof opening 6. Alternatively, the sealing strip 14 could be fixed around the external periphery of the roof panel 7 to come into sealing engagement with the periphery of the opening. In this arrangement, it would be preferred for the pressure within the sealing strip to be increased to atmospheric pressure on closing the roof panel. When the roof panel is opened, the pressure within the sealing strip 14 would be reduced by evacuation by way of the device 22. The contracted position which would be taken up by the evacuated strip 14 is illustrated in dash-dot lines in Figure 2.

Figures 6 and 7 show an alternative embodiment of a connection piece 17. As previously, this connection piece 17 has an external size and shape to match that of the sealing strip 14, but the end flanges, as 18, are not provided. In this embodiment, the end faces of the sealing strip 14 and of the connection piece 17 are abutted and adhered or bonded as appropriate.

The connection piece illustrated in Figures 6 and 7 also differs from the embodiment previously described in the means provided for coupling the interior of the sealing strip 14 to the pressure device 22. In this embodiment, instead of an integrally formed outlet spout 20, the connection piece 17 is provided with an outlet port 23 extending through the wall of the connection piece around which a thick boss 24 is formed. Preferably, the port 23 and its surrounding boss 24 are formed at the same time as the connection piece 17 is formed. A separate, L-shaped outlet spout 25 is arranged to be removably received within the port 19. In this respect, at one end thereof, the outlet spout 25 is provided with two spaced peripheral flanges 26. These flanges 26 are arranged to grip the inner and outer surfaces of the boss 24 in the axial direction to produce an airtight seal.

As previously, the hose 21 is coupled to the spout 25 to enable the interior of the sealing strip 14 to be pressurised or evacuated as required.

Figure 8 shows a further embodiment of a connection piece 17 having a detachable outlet spout 25 as in the embodiment of Figures 6 and 7. The connection piece of Figure 8 also has reduced dimension end flanges 18 to facilitate its connection to the tubular part 15 of the sealing strip 14, as described above with reference to Figures 4 and 5.

Providing a detachable outlet spout, as 25, on the connection piece 17 simplifies the fabrication of the connection piece. Furthermore, different shapes and forms of outlet spout 25 may be provided to suit the conditions at the site where the sealing strip is to be fitted. The particular form of the connection means for holding the outlet spout on the connection piece illustrated ensures an airtight seal. Of course, alternative connection means could be employed if required.

The cross-sectional shape of the tubular part of the sealing strip can be chosen as required to suit the conditions at the site where the strip is to be fitted. The tubular part can be integrally formed with securing means, for example, as the projecting rib 16. Alternatively, the sealing strip may comprise a tubular part alone, and additional means, for example, an adhesive, provided to secure the tubular part to the opening. The opening may also be provided with any additional securing flanges, as the peripheral flange 10, as required.

It will be appreciated that variations or modifications to the embodiments particularly described and illustrated can be made within the scope of the appended claims.

## Claims

1. Apparatus for sealing an opening (6) which is arranged to be opened and closed by a closure member (7, 9), said apparatus comprising an elongate, hollow sealing strip (14) for insertion between the opening (6) and the closure member (7, 9), and means (17, 20, 21, 23, 25), for coupling the interior of said sealing strip to means (22) for varying the pressure within said strip, characterised in that said coupling means comprises a hollow, connection piece (17) having an outlet medium port (23), and in that said connection piece (17) is connected to both ends of said sealing strip (14), the cross-section of said connection piece (17) substantially corresponding to that of said hollow sealing strip such that an endless seling strip is formed.

2. Apparatus as claimed in Claim 1, wherein said sealing strip (14) has an elongate, tubular part (15) whose cross-sectional shape is substantially identical to that of said connection piece (17), and wherein the size and shape of the external periphery of said tubular part and of said connection piece are substantially the same.

3. Apparatus as claimed in Claim 1 or Claim 2, wherein said hollow sealing strip (14) further comprises an elongate securing member (16) enabling the connection of said sealing strip (14) to the periphery of an opening or to its closure member.

4. Apparatus as claimed in any preceding claim, wherein at at least one end, the end surface of the connection piece (17) directly abuts the corresponding end surface of the sealing strip (14), said abutting surfaces being adhered or bonded together.

5. Apparatus as claimed in any preceding claim, wherein at at least one end, the connection piece (17) is provided with a projecting end portion (18) of reduced transverse dimension as compared to the rest of said connection piece whereby a peripheral shoulder (19) is formed, said end portion (18) being received within an end of said sealing strip (14) with the end surface of the sealing strip abutted against said shoulder, and wherein the end portion of the connection piece is suitably adhered or bonded to the end of said sealing strip.

6. Apparatus as claimed in Claim 4, wherein at both of its ends, the end surface of the connection piece (17) is directly abutted and adhered or bonded to the respective end of the sealing strip (14).

7. Apparatus as claimed in Claim 5, wherein a reduced dimension, projecting end portion (18) is provided at each end of the connection piece (17), each said end portion being received within a respective end of the sealing strip (14).

8. Apparatus as claimed in any preceding claim, wherein an outlet spout (20, 25) is connected to said outlet port (23) of the connection piece (17).

9. Apparatus as claimed in Claim 8, wherein said outlet spout (20) is integrally formed with said connection piece (17).

10. Apparatus as claimed in Claim 8, wherein said outlet spout (25) is detachably connected to said outlet port (23) of said connection piece.

11. Apparatus as claimed in Claim 10, further comprising co-operable means on said connection piece (17) and on said outlet spout (25) to detachably hold said outlet spout in position, wherein said co-operable means (24, 26) comprise a boss (24) surrounding said outlet port (23) and two spaced peripheral flanges (26) extending around one end of said outlet spout (25), the boss being engageable between said peripheral flanges.

FIG. 1

FIG. 3

FIG. 2

FIG. 4

FIG. 5

FIG. 6

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | DE-A-2 818 225 (AUDI)<br>* Page 8, lines 10-14; figures 1-5 *<br>--- | 1,2,3,8 ,9 | B 60 R 13/06<br>B 60 J 7/195<br>E 06 B 7/23 |
| Y | EP-A-0 076 749 (SAINT-GOBAIN VITRAGE)<br>* Page 5, lines 19-30; figure 6 *<br>----- | 1,2,3,8 ,9 | |

TECHNICAL FIELDS
SEARCHED (Int. Cl.4)

B 60 R
B 60 J
E 06 B

The present search report has been drawn up for all claims

| Place of search | Date of completion of the search | Examiner |
|---|---|---|
| THE HAGUE | 26-10-1988 | FOGLIA A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)